# EUROPÄISCHE PATENTANMELDUNG

(11) **EP 3 154 015 A1**
(43) Veröffentlichungstag der Anmeldung: **12.04.2017**
(21) Anmeldenummer: 15189156.1
(22) Anmeldetag: 09.10.2015
(51) Int. Cl.: G06Q 30/00

(54) **AUTHENTIFIZIERUNGSVERFAHREN FÜR ARTIKELIDENTIFIKATOREN**

(71) Anmelder: Authentic Vision GmbH, 5020 Salzburg (AT)
(72) Erfinder: WEISS, Thomas, 5020 Salzburg (AT); BERGMÜLLER, Thomas, 5020 Salzburg (AT)
(74) Vertreter: Sonn & Partner Patentanwälte

(57) **Zusammenfassung**

Computerimplementiertes Verfahren, Computerprogrammprodukt und Vorrichtung zur Authentifizierung eines auf einem Artikel (3) angeordneten visuellen Identifikators (22) auf Basis zumindest eines Bilds, wobei der Artikel (3) zumindest ein von dem Identifikator (22) unabhängiges Referenzmerkmal (7) und ein von einer Ebene abweichendes dreidimensionales Objektmerkmal (6) aufweist, wobei die Authentifizierung auf der Ermittlung und dem Vergleich einer einer relativen Anordnung (β') zwischen dem erfassten Referenzmerkmal (7) und dem erfassten visuellen Identifikator (22) sowie auf der Erfassung einer Dreidimensionalität des dreidimensionalen Objektmerkmals (6) und dem Überprüfen der erfassten Dreidimensionalität basiert.

## Beschreibung

Die Erfindung betrifft ein computerimplementiertes Verfahren zur Authentifizierung eines auf einem Artikel angeordneten visuellen Identifikators auf Basis zumindest eines Bilds, wobei der Artikel zumindest ein von dem visuellen Identifikator unabhängiges Referenzmerkmal aufweist, umfassend die Schritte: Erfassen des visuellen Identifikators in dem zumindest einen Bild; Erfassen des Referenzmerkmals in dem zumindest einen Bild; Ermitteln einer relativen Anordnung zwischen dem erfassten Referenzmerkmal und dem erfassten visuellen Identifikator; Vergleichen der ermittelten relativen Anordnung mit einer vorgegebenen relativen Anordnung; und Authentifizieren des erfassten visuellen Identifikators wenn die verglichenen relativen Anordnungen übereinstimmen.

Außerdem betrifft die Erfindung ein Computerprogrammprodukt, das direkt in den internen Speicher eines digitalen Computers geladen werden kann und Softwarecodeabschnitte umfasst, mit denen die Schritte des genannten Verfahrens ausgeführt werden, wenn das Produkt auf einem Computer läuft.

Schließlich betrifft die Erfindung eine Vorrichtung zur Authentifizierung eines auf einem Artikel angeordneten visuellen Identifikators, auf Basis zumindest eines Bilds, wobei der Artikel zumindest ein von dem Identifikator unabhängiges Referenzmerkmal aufweist, die Vorrichtung umfassend: eine Eingabeschnittstelle zur Eingabe zumindest eines Bildes; Erfassungsmittel zum Erfassen eines visuellen Identifikators in dem zumindest einem eingegebenen Bild und zum Erfassen eines Referenzmerkmals in den zumindest einem eingegebenen Bild; Verarbeitungsmittel zum Ermitteln einer relativen Anordnung zwischen einem von dem Erfassungsmitteln erfassten visuellen Identifikator und einem von den Erfassungsmitteln erfassten Referenzmerkmal, wobei die Verarbeitungsmitteln mit den Erfassungsmitteln verbunden sind; Vergleichsmittel zum Vergleichen einer von den Verarbeitungsmitteln ermittelten relativen Anordnung mit einer vorgegebenen relativen Anordnung und zum Authentifizieren eines von den Erfassungsmitteln erfassten visuellen Identifikators bei Übereinstimmung der verglichenen relativen Anordnungen; und eine Ausgabeschnittstelle zum Ausgeben eines Ergebnisses einer von den Vergleichsmitteln durchgeführten Authentifizierung.

Derartige Verfahren und Vorrichtungen basieren auf der Erkenntnis, dass ein visueller Identifikator bei der Herstellung eines Artikels in zufälliger, d.h. unvorhersehbarer, Weise relativ zu dem Referenzmerkmal auf dem Artikel angeordnet wird. Eine derartige zufällige Anordnung kann insbesondere durch stochastische Prozesse bei der Herstellung, welche beispielsweise eine Bewegung der Artikeln zwischen der Herstellung oder Aufbringung des Referenzmerkmals und der Aufbringungen des visuellen Identifikators umfasst, erzielt werden. Als Identifikator wird in diesem Zusammenhang insbesondere eine Markierung verstanden, die den jeweiligen Artikel im Wesentlichen eindeutig identifiziert. D.h. die auf die Artikel aufgebrachten Identifikatoren sind im Idealfall einzigartig. Folglich kann jedem Identifikator nach der Herstellung eindeutig eine (zufällige) relative Anordnung zugeordnet werden. Wenn nun diese zufälligen relativen Anordnungen nach der Aufbringung des Identifikators erfasst und beispielsweise im Zuge der Herstellung des Artikels in einer mit dem Identifikator verknüpften Form hinterlegt werden, können sie zu einem späteren Zeitpunkt zur Authentifizierung des visuellen Identifikators verwendet werden. Aufgrund der fehlenden Vorhersehbarkeit der relativen Anordnung müsste zur Herstellung nicht-authentischer Artikel, welche die besagte Authentifizierung passieren sollen, für jeden einzelnen Identifikator die relative Anordnung auf dem jeweiligen authentischen Artikel erfasst und derselbe Identifikator auf dem entsprechenden nicht-authentischen Artikel entsprechend angeordnet werden. Die Herstellung von erfolgreich authentifizierbaren Replikaten ist daher mit einem erheblichen, in der Regel prohibitiven Aufwand verbunden, sodass die Verwendung der zufälligen relativen Anordnung einen effektiven Kopierschutz gegenüber Artikel-Replikaten darstellt. Die Authentifizierung gemäß dem eingangs erwähnten Verfahren und der eingangs erwähnten Vorrichtung kann bereits anhand eines einzelnen Bilds erfolgen, wobei als "Bild" insbesondere die Bilddaten einer zum Beispiel mit einem digitalen Bildsensor hergestellten zweidimensionalen Aufnahme verwendet werden können. Aufgrund der praktischen Limitierung, z.B. bei der Genauigkeit solcher Aufnahmen, wird eine Übereinstimmung und somit eine erfolgreiche Authentifizierung einer relativen Anordnung in der Praxis bereits innerhalb eines Toleranzbereichs festgestellt werden, d.h. wenn die relative Anordnung zwischen dem erfassten Referenzmerkmal und dem erfassten visuellen Identifikator ausreichend mit der vorgegebenen, beispielsweise früher hinterlegten, relativen Anordnung übereinstimmt.

Ein derartiges Verfahren bzw. eine derartige Vorrichtung ist bereits aus der EP 2 878 453 A1 bekannt. Darin ist unter anderem beschrieben, dass eine Variation der Position einer Objektmarkierung relativ zu einem Artikel selbst oder zu einer auf dem Artikel aufgebrachten Orientierungsmarkierung eine zur Authentifizierung verwendbare Eigenschaft ist.

Weiters beschreibt die US 8,090,952 B2 ein Verfahren bei dem die zufällige Position und Ausrichtung eines Aufklebers zur Authentifizierung einer Markierung verwendet wird.

Bei der Verwendung gewöhnlicher zweidimensionaler Markierungen hätten die beiden bekannten Verfahren den Nachteil, relativ einfach z.B. durch Fotografieren oder Fotokopieren vervielfältigt werden zu können. Um dieses Problem zu beseitigen, wird im Stand der Technik vorgeschlagen, zumindest einen Teil der Markierung durch ein Hologramm zu bilden, sodass der zur Vervielfältigung erforderliche Aufwand den damit verbundenen Nutzen übersteigt.

Die Verwendung eines Hologramms, insbesondere eines zufällig auf den Artikeln angeordneten Hologramms hat den Nachteil, dass der zur Herstellung der Artikel erforderliche Aufwand gegenüber einer z.B. einfach aufgedruckten zweidimensionalen Markierung erheblich steigt. Es ist daher Aufgabe der Erfindung, ein Verfahren bzw. eine Vorrichtung zu schaffen, welche eine Authentifizierung ohne die Verwendung von Hologrammen ermöglicht und zugleich eine ausreichende Sicherheit gegenüber Vervielfältigung bietet.

Diese Aufgabe wird bei dem erfindungsgemäßen Verfahren der eingangs angeführten Art dadurch erzielt, dass der Artikel ein von einer Ebene abweichendes dreidimensionales Objektmerkmal aufweist, wobei zur Authentifizierung (zusätzlich zur relativen Anordnung) eine Dreidimensionalität des Objektmerkmals erfasst wird und die erfasste Dreidimensionalität des Objektmerkmals überprüft wird und der erfasste visuelle Identifikator nur dann authentifiziert wird, wenn die Dreidimensionalität des Objektmerkmals erfolgreich überprüft wurde. Dementsprechend wird die genannte Aufgabe bei der Vorrichtung der eingangs angeführten Art dadurch gelöst, dass die Erfassungsmittel zum Erfassen einer Dreidimensionalität des Objektmerkmals eingerichtet sind und die Vergleichsmittel zum Überprüfen einer von den Erfassungsmitteln erfassten Dreidimensionalität des Objektmerkmals und zum Authentifizieren des erfassten visuellen Identifikators nur bei erfolgreicher Überprüfung der Dreidimensionalität des Objektmerkmals eingerichtet sind. Das auf diese Weise zur Authentifizierung verwendete dreidimensionale Objektmerkmal kann auch mit dem visuellen Identifikator und/oder dem Referenzmerkmal überlagert sein und z.B. in einer qualitativen Beschaffenheit, insbesondere einer Dreidimensionalität, des Identifikators liegen. Das jeweils zum Erfassen des visuellen Identifikators und des Referenzmerkmals - sowie unter Umständen auch der Dreidimensionalität, wie weiter unten erläutert - verwendete Bild (bzw. die verwendeten Bilddaten) kann ein und dasselbe Bild sein oder es können zwei oder mehrere unterschiedliche Bilder sein. Bei der Ausführung des erfindungsgemäßen Verfahrens müssen im Einzelfall nicht alle Schritte ausgeführt werden, wenn ein Fehlschlag der Authentifizierung bereits nach einem Teil der Schritte feststeht. Beispielsweise kann bereits aufgrund der - unterschiedlichen - relativen Anordnung die Authentizität des erfassten Identifikators verneint werden, sodass eine Überprüfung der Dreidimensionalität unterbleiben kann. Umgekehrt kann auch bereits auf Basis einer fehlenden bzw. mangelhaften Dreidimensionalität ein authentischer Identifikator ausgeschlossen werden, sodass die relative Anordnung nicht mehr ermittelt werden muss. Darüber hinaus ist im Allgemeinen auch die Reihenfolge der Ausführung der einzelnen Schritte nicht maßgeblich, sofern nicht ausdrücklich die Resultate oder Daten eines vorangehenden Schritts verarbeitet werden. Als Dreidimensionalität wird in diesem Zusammenhang eine Eigenschaft oder ein Parameter des dreidimensionalen Objektmerkmals verstanden, welche zumindest eine Aussage darüber zulässt, ob das Objektmerkmal dreidimensional ist oder nicht, d.h. als boolescher Wahrheitswert. Vorzugsweise kann die Eigenschaft oder der Parameter eine Abweichung von einer Ebene näher definieren, oder - noch spezieller - eine dreidimensionale Form des Objektmerkmals definieren, z.B. dessen Abmessungen in drei vordefinierten Raumrichtungen oder sogar eine konkrete dreidimensionale Form eines äußeren Umrisses des Objektmerkmals. Wie sich aus den folgenden detaillierteren Lösungswegen zur Erfassung und Überprüfung der Dreidimensionalität ergibt, kann die der Erfindung zugrunde liegende und oben angegebene allgemeine technische Lösung auf im Detail unterschiedliche Arten umgesetzt werden, die sich unter der angegebenen einheitlichen Definition der Erfindung subsumieren lassen.

Im Einzelnen kann das Erfassen einer Dreidimensionalität ein Erfassen zumindest einer Projektionseigenschaft des Objektmerkmals in dem zumindest einen Bild umfassen, wobei das Überprüfen der Dreidimensionalität ein Vergleichen der erfassten Projektionseigenschaft des Objektmerkmals mit einer korrespondierenden Projektionseigenschaft einer Ebene umfasst. Als "Projektionseigenschaft" wird dabei jede Eigenschaft des dreidimensionalen Objektmerkmals oder jeder Aspekt der Dreidimensionalität des Objektmerkmals verstanden, der bzw. die einen Einfluss auf die Projektion eines zweidimensionalen Bilds auf das Objektmerkmal und/oder auf die Projektion des Objektmerkmals in eine zweidimensionale Bildebene hat; die "korrespondierende Projektionseigenschaft" einer Ebene bezeichnet dementsprechend jenen Vergleichswert oder jenes Vergleichsverhalten, der/das entweder durch Projektion desselben zweidimensionalen Bildes auf eine Ebene im Raum oder durch Projektion der Ebene im Raum in eine zweidimensionale Bildebene entsteht. Diese Herangehensweise basiert somit auf der allgemeinen Erkenntnis, dass bei einer Projektion von einer oder auf eine Ebene die Abbildungsmetrik bis auf eine lineare Transformation erhalten bleibt, was andererseits bei einer Projektion von einem oder auf ein von einer Ebene abweichendes dreidimensionales Objektmerkmal nicht der Fall ist. Verschiedene Anwendungsbeispiele dieses allgemeinen Prinzips werden aus den weiter unten erläuterten abhängigen Ansprüchen verständlich.

Weiters kann im Einzelnen das Erfassen einer Dreidimensionalität ein Erfassen zumindest einer Eigenschaft der dreidimensionalen Form des Objektmerkmals umfassen, wobei das Überprüfen der Dreidimensionalität ein Vergleichen der erfassten Eigenschaft der dreidimensionalen Form des Objektmerkmals mit einer korrespondierenden Eigenschaft einer vorgegebenen dreidimensionalen Form umfasst. Als dreidimensionale Form wird hier im Allgemeinen die Form der Außen- oder äußeren Grenzfläche des Objektmerkmals verstanden, d.h. es handelt sich auch um einen dreidimensionalen Umriss oder eine dreidimensionale Kontur des Objektmerkmals. Die Form setzt sich im Wesentlichen aus durch Linien und Ebenen verbundenen Punkten im Raum zusammen, welche zusammen eine Oberfläche des Objektmerkmals bilden. Als Eigenschaft der dreidimensionalen Form ist jede diese Form beschreibende Eigenschaft zu verstehen, z.B. die Abmessungen der Form im Raum, die Gesamtoberfläche der Form, eine maximale Ausdehnung ausgehend von einem geometrischen Schwerpunkt der Form, ein minimaler Winkel zwischen zwei Ebenen der Form, etc.

Weiters können so gebildete geometrische Formen oder Flächen bzw. deren Erscheinungsbild näher spezifiziert bzw. diese Information zur näheren Beschreibung der dreidimensionalen Eigenschaft herangezogen werden, indem der durch die durch Linien und Ebenen verbundenen Punkte im Raum umschlossene Inhalt in geeigneter Weise untersucht wird. Beispielsweise kann eine Außenfläche einer Verpackung näher beschrieben und spezifiziert werden, indem der aufgedruckte Text und/oder die aufgedruckten Bilder der einzelnen Flächen über im Stand der Technik vorgeschlagene objektidentifizierende oder musteridentifizierende Verfahren erfasst wird/werden. Dadurch kann bei einfachen Modellen, beispielsweise einem Würfel, die Rotation bzw. Lage im Raum des Objektmerkmals eindeutig festgestellt werden.

Eine noch genauere Überprüfung kann durchgeführt werden, wenn beim Erfassen der Dreidimensionalität des Objektmerkmals ein dreidimensionales Modell des Objektmerkmals aus der zumindest einen erfassten Eigenschaft der dreidimensionalen Form des Objektmerkmals ermittelt wird, und beim Überprüfen der Dreidimensionalität des Objektmerkmals das ermittelte dreidimensionale Modell mit einem vorgegeben Modell verglichen wird. Als Modell ist hier eine abstrakte und im Allgemeinen vereinfachte Beschreibung der Form oder eines Teils davon zu verstehen. Das Modell gibt die Form selbst zumindest annähernd wieder. D.h. es wird bei der Erfassung eine annähernde Beschreibung der Form des Objektmerkmals (das Modell) ermittelt und mit einer vorgegebenen Beschreibung (dem vorgegeben Modell) verglichen. Jedes Modell umfasst dementsprechend eine Vielzahl von Eigenschaften der Form, welche die Form mehr oder minder genau definieren und eine zumindest angenäherte Rekonstruktion der Form erlauben. Bei dieser Vorgehensweise wird somit nicht nur die Dreidimensionalität an sich überprüft, sondern darüber hinaus das Vorliegen einer speziellen, autorisierten Form. Dadurch kann eine höhere Sicherheitsstufe erzielt werden, weil zur Umgehung der Überprüfung eine wesentlich genauere Reproduktion eines authentischen Artikels erforderlich wäre. Zusätzlich kann eine nähere Beschreibung der Flächen und Linien des Modells basierend auf deren erfasstem umschlossenen Inhalt und/oder basierend auf deren erfasstem Erscheinungsbild, wie oben beschrieben, erfolgen.

Insbesondere im Zusammenhang mit der Erfassung einer Eigenschaft der dreidimensionalen Form des Objektmerkmals ist es vorteilhaft, wenn zum Erfassen zumindest einer Eigenschaft der dreidimensionalen Form des Objektmerkmals ein geeignetes Aufnahmeverfahren, insbesondere ein abstandsmessendes Verfahren, vorzugsweise ein Lichtlaufzeitverfahren, ein Verfahren zur Erfassung eines 4-D-Lichtfelds, vorzugsweise mit einer Lichtfeldkamera, oder ein Verfahren basierend auf einer Stereokamera oder einem Triangulationssystem, verwendet wird. Derartige Aufnahmeverfahren sind an sich bekannt und werden beispielsweise bei Augmented-Reality Anwendungen oder bei der Herstellung von 3D-Unterhaltungsfilmen verwendet. Zunehmend werden geeignete Technologien auch in Benutzerendgeräten, wie beispielsweise Smartphones, eingebaut, weil die dadurch zusätzlich erfassbaren Daten eine einfachere Handhabung und vielseitige Einsetzbarkeit des Gerätes begünstigen; sie können aber auch als Unterstützungstechnologien, z.B. zur raschen Fokussierung eines optischen Systems, verwendet werden.

Zur Erfassung einer Projektionseigenschaft des Objektmerkmals oder zumindest einer Eigenschaft der dreidimensionalen Form des Objektmerkmals können beispielsweise mehrere aus unterschiedlichen Betrachtungswinkeln aufgenommene Bilder des Objektmerkmals in Beziehung gesetzt werden. Diese Vorgehensweise macht sich die Tatsache zu Nutze, dass bei den Aufnahmen aus unterschiedlichen Betrachtungswinkeln unterschiedliche Projektionen des dreidimensionalen Objektmerkmals in eine Bildebene des jeweiligen Bilds durchgeführt werden. Aufgrund der von einer Ebene abweichenden Form des dreidimensionalen Objektmerkmals werden sich die einzelnen Punkte des Objektmerkmals in den unterschiedlichen Projektionen verschieden stark gegeneinander verschieben. Demgegenüber wird es im Fall einer Ebene (z.B. bei einer zweidimensionalen Vervielfältigung) lediglich zu einer gleichmäßig linearen Verschiebung der Abbildungspunkte kommen. Indem die den unterschiedlichen Projektionen entsprechenden Bilder in Beziehung gesetzt werden, kann somit erkannt werden, ob es sich bei den aufgenommenen Bildern um Projektionen einer Ebene oder um Projektionen eines dreidimensionalen Objektmerkmals handelt, wobei beispielsweise die relativen Änderungen der Abstände zwischen mehreren in den Bildern lokalisierten Bildpunkten miteinander verglichen werden. Darüber hinaus kann, wie etwa bei bekannten Stereo-3D-Kameras, aus den Bildern auf die zugrunde liegende Form des Objektmerkmals bzw. deren Eigenschaften zurückgerechnet werden.

Dabei ist es besonders günstig, wenn den aus unterschiedlichen Betrachtungswinkeln aufgenommenen Bildern jeweils eine Bewegung eines Erfassungsmittels zwischen den Aufnahmen der Bilder zugeordnet ist und beim Überprüfen der Dreidimensionalität des Objektmerkmals eine anhand eines vorgegebenen Modells der dreidimensionalen Form des Objektmerkmals und den zugeordneten Bewegungen ermittelte Verzerrung des visuellen Identifikators und/oder des Referenzmerkmals validiert wird. D.h. es werden auf Basis der bekannten, vorgegeben Form des Objektmerkmals Projektionen des Objektmerkmals in bestimmte Bildebenen berechnet, wobei diese Bildebenen entsprechend den erfassten Bewegungen zwischen den vorliegenden Aufnahmen relativ zueinander verschoben und verschwenkt werden. Anschließend kann durch einen Vergleich der Aufnahmen mit den erwarteten Projektionen festgestellt werden, ob sich das Objektmerkmal ähnlich dem vorgegeben Modell verhält. Demzufolge muss bei dieser Vorgehensweise nicht ein eigenes Modell des Objektmerkmals aus den erfassten Bilddaten rekonstruiert werden, sondern die Überprüfung wird auf der Ebene der zweidimensionalen Projektionen durchgeführt. Idealerweise kann die Bewegung eines Erfassungsmittels dabei über geeignete Verfahren, beispielsweise mittels in Benutzerendgeräten verbauten Beschleunigungssensoren oder Lagesensoren, ermittelt werden.

Vorzugsweise kann das in Beziehung Setzen einen Vergleich geometrischer Verzerrungen des visuellen Identifikators und/oder des Referenzmerkmals auf der Oberfläche des Artikels in den aus unterschiedlichen Betrachtungswinkeln aufgenommenen Bildern umfassen. Da sowohl der visuelle Identifikator als auch das Referenzmerkmal naturgemäß leicht maschinell erfassbare optische Eigenschaften, insbesondere eine einfach und zuverlässig erfassbare Geometrie und Position, aufweisen, kann die Verzerrung dieser Merkmale bzw. deren Linearität besonders einfach und zuverlässig ermittelt werden und somit erkannt werden, ob es sich bei den Bildern um unterschiedliche Projektionen einer dreidimensionalen Vorlage oder einer zweidimensionalen Vorlage handelt.

Weiters hat es sich als vorteilhaft herausgestellt, wenn zur Erfassung einer Projektionseigenschaft des Objektmerkmals oder zumindest einer Eigenschaft der dreidimensionalen Form des Objektmerkmals mehrere bei unterschiedlichen Lichtverhältnissen aufgenommene Bilder des Objektmerkmals in Beziehung gesetzt werden. Diese Vorgehensweise macht sich die Erkenntnis zunutze, dass die Projektion einer - im einfachsten Fall punktförmigen - Lichtquelle auf eine Ebene leicht von einer Projektion derselben Lichtquelle auf ein von einer Ebene abweichendes dreidimensionales Objektmerkmal unterschieden werden kann. Im Einzelnen wird es bei dem dreidimensionalen Objektmerkmal an verschiedenen Bildpunkten zu unterschiedlichen und/oder unterschiedlich geänderten Helligkeiten je nach Einfallswinkel des Lichts sowie gegebenenfalls zu einem Schattenwurf und somit eindeutig erkennbaren abgedunkelten Bereichen kommen. Als unterschiedliche Lichtverhältnisse können beispielsweise Aufnahmen mit und ohne einer zusätzlichen Lichtquelle (z.B. einem Kamerablitz) verwendet werden. Alternativ können mehrere Aufnahmen bei unterschiedlichen Einfallswinkeln derselben oder verschiedener Lichtquellen verwendet werden.

Bei einer weiteren bevorzugten Ausführungsform des erfindungsgemäßen Verfahrens kann eine Projektionseigenschaft des Objektmerkmals oder zumindest eine Eigenschaft der dreidimensionalen Form des Objektmerkmals auch bereits auf Basis nur eines aufgenommenen Bildes ermittelt werden. Hierbei wird zur Erfassung einer Projektionseigenschaft des Objektmerkmals eine geometrische Verzerrung einer auf das Objektmerkmal projizierten Lichtspur auf Basis eines Bildes der Lichtspur ermittelt. Diese Vorgehensweise macht sich die Erkenntnis zunutze, dass die Projektion eines bekannten Bildes auf eine (beliebig angeordnete) Ebene im Raum und von dort in eine Bildebene nur zu einer linearen Verzerrung des ursprünglichen bekannten Bildes führen kann. Dies lässt sich am einfachsten anhand des Bildes einer Linie verstehen, welches selbst nach mehrfacher Projektion auf im Raum unterschiedlich zueinander orientierte Ebenen immer wieder eine Linie ergeben wird, wobei sich im Allgemeinen lediglich die Länge der Linie ändert. Andererseits wird es bei einer Projektion auf ein von einer Ebene abweichendes dreidimensionales Objektmerkmal zu einer Verformung der Linie kommen, anhand der somit die Dreidimensionalität des Objektmerkmals erkannt werden kann. Dabei kann z.B. das Ausmaß der Verformung eine Aussage über die Tiefe, d.h. die Variation des Abstandes zur Lichtquelle, zulassen, welche eine Eigenschaft der dreidimensionalen Form des Objektmerkmals ist.

Weiters ist es günstig wenn das Referenzmerkmal zugleich das dreidimensionale Objektmerkmal ist. In diesem Fall kann das Referenzmerkmal jedenfalls in demselben Bild wie die Projektionseigenschaft des Objektmerkmals erfasst werden, sodass im Allgemeinen die Aufnahme und Verarbeitung einer geringeren Datenmenge erforderlich ist. Alternativ kann das Objektmerkmal selbstverständlich z.B. die dreidimensionale Form des Artikels selbst bzw. eines Teils des Artikels sein, wobei das Referenzmerkmal z.B. eine separat auf dem Artikel aufgebrachte Markierung sein kann.

In einer Variante des erfindungsgemäßen Verfahrens, kann die vorgegebene relative Anordnung und/oder ein vorgegebenes Modell vor dem Vergleich aus einer zentralen Datenbank abgerufen werden. Dabei wird in der Regel eine Datenbankabfrage auf Basis des zuvor erfassten visuellen Identifikators durchgeführt, und die diesem Identifikator zugeordnete relative Anordnung oder das zugeordnete Modell der Datenbank entnommen. Die Nutzung einer zentralen Datenbank hat dabei den Vorteil, dass einzelne Identifikatoren auf einfache Weise ungültig gemacht werden können, indem beispielsweise die zugeordnete relative Anordnung oder das zugeordnete Modell gelöscht wird. Auf diese Weise kann beispielsweise eine Authentifizierung bekanntermaßen kopierter Identifikatoren nachträglich unterbunden werden.

In einer anderen Variante des erfindungsgemäßen Verfahrens kann die vorgegebene relative Anordnung und/oder ein vorgegebenes Modell auf dem Artikel selbst in visuell kodierter Form hinterlegt sein und vor dem Vergleich erfasst werden. Dies hat den Vorteil, dass zur Authentifizierung weder der Betrieb einer zentralen Datenbank noch eine Verbindung zu einer solchen Datenbank erforderlich ist. Die Authentifizierung kann daher in der Regel rascher und zuverlässiger erfolgen.

Im Zusammenhang mit der auf dem Artikel selbst hinterlegten relativen Anordnung und/oder dem auf dem Artikel hinterlegten vorgegebenen Modell ist es günstig, wenn diese Anordnung bzw. dieses Modell vor dem Vergleich mit einem vorgegebenen öffentlichen Schlüssel gemäß einem asymmetrischen Verschlüsselungsverfahren entschlüsselt wird. Dies hat den Vorteil, dass nur der Besitzer des dem öffentlichen Schlüssel entsprechenden privaten Schlüssels eine erfolgreich authentifizierbare relative Anordnung oder ein erfolgreich authentifizierbares Modell auf dem Artikel hinterlegen kann. Da Nachahmer diesen privaten Schlüssel nicht kennen, können sie keinen erfolgreich authentifizierbaren visuellen Identifikator auf ihren Artikeln anbringen. Entsprechend den oben erläuterten Verfahren zur Erfassung einer Projektionseigenschaft des Objektmerkmals ist es bei der erfindungsgemäßen Vorrichtung vorteilhaft, wenn die Erfassungsmittel eingerichtet sind, zum Erfassen einer Dreidimensionalität zumindest eine Projektionseigenschaft des Objektmerkmals in dem zumindest einen eingegebenen Bild zu erfassen, und wenn die Vergleichsmittel eingerichtet sind, zum Überprüfen der Dreidimensionalität des Objektmerkmals eine von den Erfassungsmitteln erfassten Projektionseigenschaft des Objektmerkmals mit einer korrespondierenden Projektionseigenschaft einer Ebene zu vergleichen.

Alternativ oder zusätzlich ist es günstig, wenn die Erfassungsmittel eingerichtet sind, zum Erfassen einer Dreidimensionalität zumindest eine Eigenschaft der dreidimensionalen Form des Objektmerkmals zu erfassen, und wenn die Vergleichsmittel eingerichtet sind, zum Überprüfen der Dreidimensionalität des Objektmerkmals eine erfassten Eigenschaft der dreidimensionalen Form des Objektmerkmals mit einer korrespondierenden Eigenschaft einer vorgegebenen dreidimensionalen Form zu vergleichen.

In diesem Zusammenhang können vorzugsweise die Erfassungsmittel eingerichtet sein, zum Erfassen einer Dreidimensionalität ein dreidimensionales Modell des Objektmerkmals aus der zumindest einen erfassten Eigenschaft der dreidimensionalen Form des Objektmerkmals zu ermitteln, und es können die Vergleichsmittel eingerichtet sein, zum Überprüfen der Dreidimensionalität des Objektmerkmals das ermittelte dreidimensionale Modell mit einem vorgegeben Modell zu vergleichen.

Insbesondere können die Erfassungsmittel im Rahmen der Erfindung zum Erfassen zumindest einer Eigenschaft der dreidimensionalen Form des Objektmerkmals geeignete Aufnahmemittel umfassen, insbesondere Aufnahmemittel zur Abstandsmessung, zur Lichtlaufzeitmessung, zur Erfassung eines 4-D-Lichtfelds, vorzugsweise eine Lichtfeldkamera, eine Stereokamera oder ein Triangulationssystem.

Darüber hinaus hat es sich als vorteilhaft herausgestellt, wenn die Erfassungsmittel eingerichtet sind, zum Erfassen einer Projektionseigenschaft des Objektmerkmals oder zumindest einer Eigenschaft der dreidimensionalen Form des Objektmerkmals mehrere aus unterschiedlichen Betrachtungswinkeln aufgenommene Bilder der Objektmerkmals in Beziehung zu setzen.

In entsprechender Weise ist es günstig, wenn die Bilder durch einen Vergleich der geometrischen Verzerrungen des visuellen Identifikators und/oder des Referenzmerkmals auf der Oberfläche des Objektmerkmals in den einzelnen Bildern von den Erfassungsmitteln in Beziehung gesetzt werden können.

In einer weiteren Ausführungsform und mit den oben beschriebenen Vorteilen können die Erfassungsmittel eingerichtet sein, zum Erfassen einer Projektionseigenschaft des Objektmerkmals oder zumindest einer Eigenschaft der dreidimensionalen Form des Objektmerkmals mehrere bei unterschiedlichen Lichtverhältnissen aufgenommene Bilder des Objektmerkmals in Beziehung zu setzen.

Alternativ oder zusätzlich ist es günstig wenn die Erfassungsmittel eingerichtet sind, zum Erfassen einer Projektionseigenschaft des Objektmerkmals oder zumindest einer Eigenschaft der dreidimensionalen Form des Objektmerkmals eine geometrische Verzerrung einer auf das Objektmerkmal projizierten Lichtspur auf Basis eines Bilds der Lichtspur zu ermitteln.

Im Rahmen der oben beschriebenen Verfahren und Vorrichtungen kann der visuelle Identifikator beispielsweise durch eine Markierung gebildet sein. Insbesondere kann der visuelle Identifikator vorab auf den Artikel aufgebracht werden, wobei die Anordnung des visuellen Identifikators auf dem Artikel zufällig, vorteilhafterweise stochastisch, festgelegt wird. Mit anderen Worten ist es günstig, wenn die zufällig festgelegte Anordnung des visuellen Identifikators aus einer stochastischen Bewegung des Artikels vor der Aufbringung des visuellen Identifikators resultiert. Alternativ kann die Anordnung des visuellen Identifikators vor der Aufbringung des visuellen Identifikators auch pseudo-zufällig generiert werden und der visuelle Identifikator entsprechend der generierten Anordnung auf den Artikel aufgebracht werden. Hinsichtlich der konkreten Ausgestaltung ist es günstig, wenn der visuelle Identifikator durch in menschenlesbarer oder maschinenlesbarer Form kodierte Daten gebildet ist. Es kann sich beispielsweise um aus Buchstaben und/oder Zahlen zusammengesetzte Beschriftungen, Barcodes oder QR-Codes handeln. Dabei kann der visuelle Identifikator entweder direkt auf den Artikel aufgebracht bzw. auf dem Artikel erzeugt werden oder auf einen Träger aufgebracht werden, welcher mit dem Artikel fest verbunden wird.

Die oben beschriebenen Vorteile der Erfindung können im Allgemeinen unabhängig von der Bedeutung bzw. Nutzung des Identifikators erzielt werden. Besonders vorteilhaft ist die Verwendung des erfindungsgemäß authentifizierbaren Identifikators als einzigartiger Code, welcher beispielsweise mit einem Smartphone gescannt, authentifiziert und daraufhin als Schlüssel verwendet werden kann. Dem Benutzer des Smartphones kann auf diese Weise z.B. der Zugriff auf einen Mitgliederbereich einer Website bzw. eines Anbieters gewährt werden; es können mit dem Schlüssel Rabatte bei durchgeführten oder zukünftigen Käufen verknüpft werden; oder es kann die Teilnahme an einem Gewinnspiel an dem Schlüssel geknüpft werden. Durch die Bedingung einer Authentifizierung gemäß den erfindungsgemäßen Verfahren bzw. mit der erfindungsgemäßen Vorrichtung kann sichergestellt werden, dass die genannten Vorteile nur für Benutzer bzw. Besitzer eines Originalprodukts mit dem entsprechend authentifizierbaren Identifikator zugänglich sind.

Die Erfindung wird nachfolgend anhand von besonders bevorzugten Ausführungs- bzw. Anwendungsbeispielen, auf die sie jedoch nicht beschränkt sein soll, und unter Bezugnahme auf die Zeichnungen weiter erläutert. Dabei zeigen im Einzelnen:
Fig. 1 schematisch den Boden einer Getränkedose mit einem maschinenlesbaren Identifikator;
Fig. 2 schematisch den Boden einer Getränkedose mit einem menschenlesbaren Identifikator;
Fig. 3 schematisch einen Artikel mit einer auf dem Artikel in kodierter Form hinterlegten relativen Anordnung;
Fig. 4 schematisch eine Getränkeverschlusskappe mit einem innen angebrachten menschenlesbaren Identifikator;
Fig. 5 schematisch den Ablauf der Herstellung und Authentifizierung einer Getränkedose gemäß Fig. 2;
Fig. 6 schematisch eine Lichtspur auf dem Boden einer Getränkedose gemäß Fig. 3;
Fig. 7 schematisch die Lichtspur auf dem Boden einer 2D-Kopie einer Getränkedose gemäß Fig. 3; und
Fig 8 schematisch den Aufbau einer Vorrichtung und eines Computerprogrammprodukts zur Authentisierung von Artikeln gemäß Figuren 1-7.

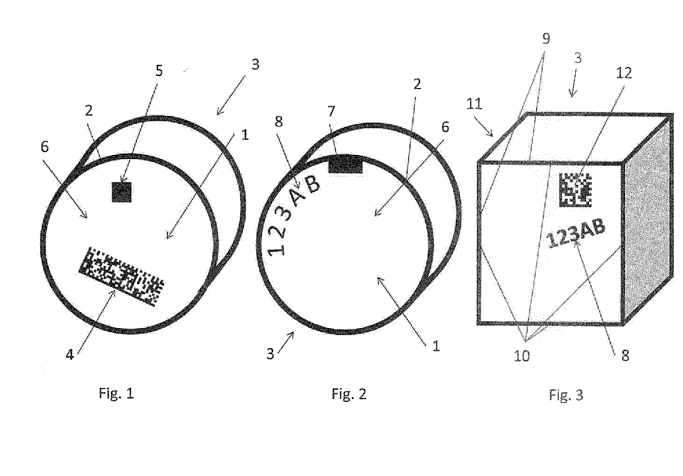

Fig. 1 zeigt schematisch eine Ansicht von unten auf den Dosenboden 1 einer Getränkedose 2. Die Getränkedose 2 ist ein Artikel 3, welcher mit einem eindeutigen und kopiergeschützten Schlüssel, z.B. zur Teilnahme an einem Gewinnspiel, versehen werden soll. Der Dosenboden 1 der Gertränkedose 2 ist dabei in grundsätzlich bekannter Weise nach innen gewölbt, wodurch die Widerstandsfähigkeit des Dosenbodens 1 gegenüber dem in der Getränkedose 2 herrschenden Druck erhöht wird. Auf dem gewölbten Dosenboden 1 ist ein visueller Identifikator 4 aufgebracht, insbesondere aufgedruckt. Der visuelle Identifikator 4 ist in einer maschinenlesbaren Form kodiert, insbesondere als DataMatrix. Da der Identifikator 4 von unten auf den gewölbten Dosenboden 1 aufgedruckt wird, ist er in der Ansicht in Fig. 1 unverzerrt dargestellt. Außerdem ist auf dem gewölbten Dosenboden 1 eine in einem separaten Druckschritt aufgebrachte Referenzmarkierung zur Bildung eines Referenzmerkmals 5 aufgedruckt, um die Zufälligkeit der Anordnung zwischen dem Identifikator 4 und der Referenzmarkierung bzw. dem Referenzmerkmal 5 sicherzustellen, wobei die Getränkedose 2 zwischen dem Druckschritt zum Aufbringen des Identifikators 4 und dem Druckschritt zum Aufbringen des Referenzmerkmals 5 einem Vorschub auf einem Förderband ausgesetzt wird, wodurch die relative Position und Ausrichtung der aufgebrachten Merkmale von den stochastischen Prozessen während des Vorschubs abhängen und daher nicht vorhersehbar sind. Die Projektionseigenschaft des als dreidimensionales Objektmerkmal 6 fungierenden gewölbten Dosenbodens 1 kann beispielsweise anhand der speziellen Lichtbrechung im konkaven Dosenboden 1 erfasst werden. Die mit einer solchen Lichtbrechung verbundene Projektionseigenschaft kann auf einfache Weise durch Vergleich einer Aufnahme mit Auslösung eines Kamerablitzes z.B. eines zur Authentifizierung verwendeten Smartphones und einer Aufnahme ohne einen solchen Blitz erfasst werden.

Fig. 2 zeigt ebenfalls eine Getränkedose 2 mit einem entsprechenden gewölbten Dosenboden 1, wobei hier das Referenzmerkmal 7 durch eine Nase oder Einkerbung im Dosenrand gebildet ist. In diesem Beispiel ist der Identifikator 8 in Form einer menschenlesbaren alphanumerischen Kodierung am Dosenboden 1 aufgedruckt. Nachdem das Aufdrucken des Identifikators 8 und die Herstellung der Einkerbung naturgemäß unterschiedlichen Prozessschritten bei der Produktion der Getränkedose 2 entspricht, kann jedenfalls eine zufällige Anordnung zwischen den beiden Merkmalen am Artikel 3 (d.h. der Getränkedose 2) gewährleistet werden. Zur Authentifizierung des Identifikators 8 kann in diesem Fall entweder wie bei Fig. 1 das dreidimensionale Objektmerkmal 6 des konkaven Dosenbodens 1 oder aber die dreidimensionale Einkerbung, welche zugleich auch das Referenzmerkmal 7 darstellt, verwendet werden. Die Projektionseigenschaft der Einkerbung lässt sich auf einfache Weise durch den speziellen Schattenwurf bei einer nicht exakt in die Einkerbung fallenden Beleuchtung feststellen.

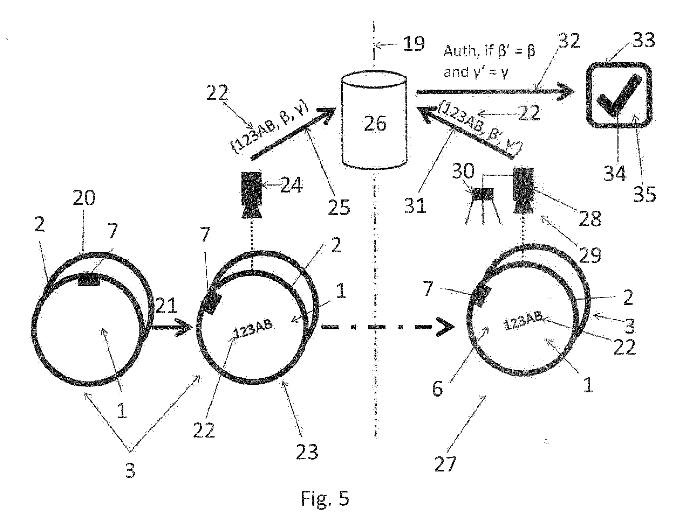

Bei den in Fig. 1 und 2 gezeigten Artikeln 3 ist die relative Anordnung zwischen dem Identifikator 4 bzw. 8 und dem Referenzmerkmal 5 bzw. 7 nicht auf der Getränkedose 2, d.h. dem Artikel 3 selbst hinterlegt. Stattdessen wird zur Authentifizierung der Identifikatoren 4 bzw. 8 die jeweils erfasste relative Anordnung mit einer in einer Datenbank 26 (vgl. Fig. 5) hinterlegten relativen Anordnung verglichen. Demgegenüber ist bei dem in Fig. 3 gezeigten Beispiel die relative Anordnung zwischen dem Identifikator 8 und den als Referenzmerkmal 9 dienenden Faltkanten 10 des Artikels 11 direkt auf dem Artikel 11 selbst hinterlegt. Insbesondere ist die relative Anordnung in maschinenlesbar kodierter Form, d.h. als maschinenlesbarer Code 12, auf dem Artikel 11 aufgebracht.

Die gleichzeitige Verwendung einer dreidimensionalen Objekteigenschaft, beispielsweise der Faltkanten 10 einer Medikamentenpackung, als Referenzmerkmal 9 ist ganz Allgemein insbesondere dann von Vorteil, wenn die Authentifizierung ohne zentrale Datenbank 26 durchgeführt und die Anordnung direkt am Artikel 11 selbst, z.B. als Code 12, abgelegt wird. Bei einer Fälschung könnte nämlich die Anordnung und Beschaffenheit des Identifikators 8 und die eines zusätzlich aufgebrachten Referenzmerkmals 5 (vgl. Fig. 1) von einem echten, authentischen Artikel 3 in entsprechend aufwändigen Verfahren ermittelt und mit anderen Produktionsverfahren exakt nachgebildet werden. Als Beispiel ist hier die Vermessung eines im Inkjet-Verfahren aufgebrachten Identifikators 4 und die nachfolgende Reproduktion des Referenzmerkmals 5 sowie des Identifikators 4 mittels genauerem Offsetdruckverfahren in einem einzigen Produktionsschritt zu nennen. Indem Identifikator 4 und Referenzmerkmal 5 im gleichen Produktionsschritt aufgebracht werden können, kann auch die im Original zufällige Anordnung reproduziert werden. Da die Authentifizierung ohne zentralen Datenbankzugriff passiert, können heute im Stand der Technik übliche statistische Verfahren zur Erkennung solcher Fälschungen durch Häufigkeitsanalysen des Identifikators 4 nicht zur Anwendung gebracht werden bzw. sind nicht ausreichend zuverlässig. Insbesondere die Authentisierung von Medikamenten, welche vermehrt in Regionen ohne oder mit nur schwacher Internetanbindung auftreten und damit die Codierung der Anordnung direkt am Artikel 11 erfordern, könnte durch solch einen Angriff gebrochen werden. Indem nun die dreidimensionale Objekteigenschaft, welche jedenfalls nur durch ein stark toleranzbehaftetes Verfahren, beispielsweise Falten oder Falzen einer Schachtel, produziert werden kann und daher praktisch nicht ausreichend exakt reproduzierbar ist, gleichzeitig als Referenzmerkmal 9 verwendet wird, ist sichergestellt, dass selbst bei exakter Reproduktion des Identifikators 8 aufgrund der toleranzbedingt zufälligen Anordnung relativ zum Referenzmerkmal 9 eine automatisierte Replikation verhindert werden kann. Die wesentlich schwierigere bzw. praktisch nicht wirtschaftlich mögliche Reproduktion bei diesem Verfahren beruht darauf, dass die Schachteln vor dem Falten oder Falzen bedruckt werden müssen (da ein Bedrucken der gefalteten Schachteln deutlich schwieriger wäre). Somit ist der Identifikator bereits aufgebracht bevor das Referenzmerkmal (die Faltkanten) überhaupt erzeugt werden kann. Darüber hinaus ist die Ausrichtung der Schachtel beim Falten oder Falzen nur in einem relativ breiten Toleranzbereich vordefinierbar, sodass die relative Anordnung am fertigen Artikel nicht vorab festgelegt werden kann.

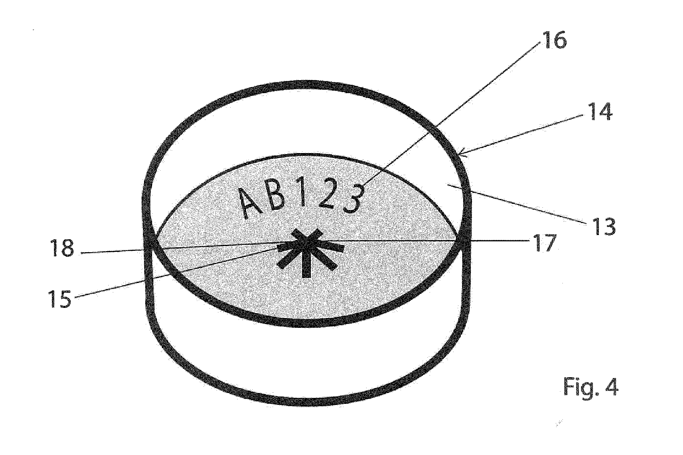

In Fig. 4 ist die Innenseite 13 einer Verschlusskappe 14 einer Getränkeflasche (nicht gezeigt), welche in diesem Beispiel der Artikel ist, dargestellt. Die Innenseite 13 weist dabei eine nach innen vorstehende sternförmige Ausprägung 15 auf, welche aus dem Gussprozess bei der Herstellung der Verschlusskappe 14 stammt. Benachbart der Ausprägung 15 ist ein Identifikator 16 in Form einer Buchstabenkombination auf der Innenseite 13 der Verschlusskappe 14 eingeprägt. Bei dieser Verschlusskappe 14 dient die Ausprägung 15 sowohl als Referenzmerkmal 17 als auch als dreidimensionales Objektmerkmal 18, wobei hinsichtlich der relativen Anordnung, insbesondere der vom Identifikator 16 in Bezug auf die Spitze der Ausprägung 15 und die sternförmigen Ausläufer der Ausprägung 15 überstrichene Winkelbereich zur Erfassung der relativen Anordnung verwendet wird.

Fig. 5 zeigt schematisch die Herstellungsschritte zur Markierung und Authentifizierung eines Artikels 3 in Form einer Getränkedose 2 vergleichbar jener in Fig. 2. Die Herstellung der Getränkedose 2 ist dabei auf der linken Seite der strichpunktierten Linie 19 angedeutet und der Vorgang der Authentifizierung ist auf der rechten Seite der strichpunktierten Linie 19 in Fig. 5 schematisch dargestellt. In einem ersten Herstellungsschritt 20 wird die Getränkedose 2 mit einer bereits vorhandenen Einkerbung, welche das Referenzmerkmal 7 bildet, und dem der Getränkedose 2 eigenen gewölbten Dosenboden 1 übernommen. Anschließend wird in einem Druckschritt 21 ein Identifikator 22 in Form einer Kombination aus alphanumerischen Zeichen auf den Dosenboden 1 aufgedruckt. Im anschließenden Registrierungsschritt 23 wird der Dosenboden 1 mit einer Kamera 24 aufgenommen, wobei insbesondere die Position und relative Anordnung β zwischen der als Referenzmerkmal 7 fungierenden Einkerbung und dem an zufälliger Stelle aufgedruckten Identifikator 22 erfasst wird. Die erfasste relative Anordnung β wird zusammen mit dem erfassten Identifikator 22 in einem Übermittlungsschritt 25 an die zentrale Datenbank 26 übermittelt. Die Datenbank 26 speichert eine Verknüpfung des Identifikators 22 mit der erfassten relativen Anordnung β, wodurch die Registrierung der Getränkedose 2 und somit des Artikels 3 abgeschlossen ist.

Zu einem späteren Zeitpunkt führt beispielsweise der Käufer der Getränkedose 2 eine Authentifizierung 27 gemäß dem erfindungsgemäßen Verfahren durch. Dabei wird der konkave Dosenboden 1 mittels einer Kamera 28, z.B. eines Smartphones des Benutzers, welche Kamera 28 als Eingabeschnittstelle 29 fungiert, aufgenommen und von einer auf dem Smartphone installierten Authentifizierungs-App der Identifikator 22 und das Referenzmerkmal 7 erfasst. Dabei wird zugleich ein Kamerablitz 30 ausgelöst, welcher eine charakteristische Lichtbrechung im konkaven Dosenboden 1 hervorruft, die ebenfalls in der Aufnahme der Kamera 28 von der App erfasst wird. Die erfasste Lichtbrechung wird mit einer korrespondierenden Lichtbrechung einer Ebene verglichen und somit festgestellt, dass es sich bei dem von der Kamera 28 aufgenommenen Bild um eine Aufnahme der dreidimensionalen Getränkedose 2 mit dem dreidimensionalen Objektmerkmal 6 des konkaven Dosenbodens 1 handelt. Anschließend wird die relative Anordnung β' zwischen dem erfassten Referenzmerkmal 7 der Einkerbung und dem erfassten Identifikator 22 ermittelt und zusammen mit dem erfassten Identifikator 22 zu der zentralen Datenbank 26 übertragen (Übertragungsschritt 31). Die zentrale Datenbank 26 vergleicht die ermittelte relative Anordnung β' mit der während der Dosenproduktion hinterlegten relativen Anordnung β und stellt die Übereinstimmung der beiden relativen Anordnungen β, β' fest. Im anschließenden Authentifizierungsschritt 32 wird das positive Ergebnis des Vergleichs und somit der Authentifizierung 27 an das Smartphone 33 des Benutzers übermittelt und auf dessen Bildschirm in Form einer entsprechenden Nachricht 34 ausgegeben, wobei der Bildschirm die Ausgabeschnittstelle 35 ist.

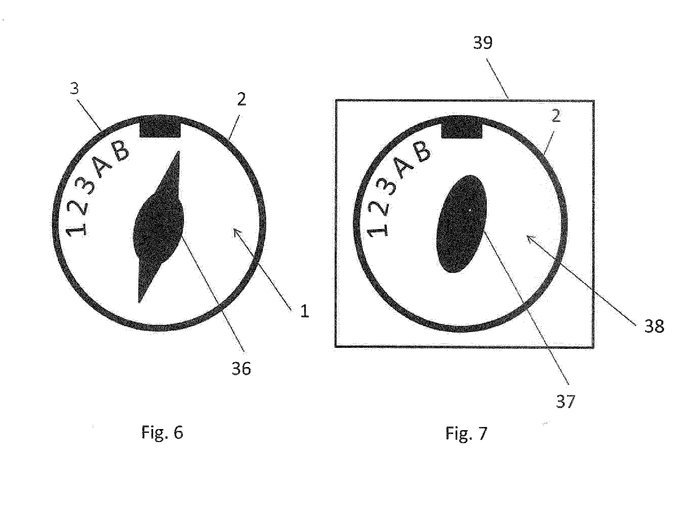

Figur 6 zeigt beispielsweise die Form einer Lichtspur 36 auf dem Boden einer Getränkedose 2 gemäß Fig. 2. Dabei wird die Form der Lichtspur dahingehend durch die Dreidimensionalität des Dosenbodens 1 verzerrt, dass sie aufgrund der konkaven Oberfläche des Dosenbodens 1 in ihrer Form nach außen hin schmäler wird und spitz zuläuft. Diese einfachen geometrischen Eigenschaften der projizierten Lichtspur 36 können anhand eines Bildes leicht erfasst und überprüft werden, indem beispielsweise das Verhältnis der maximalen und minimalen Ausdehnung der projizierten Lichtspur 36 ermittelt und mit einem erwarteten Verhältnis verglichen wird.

Zum besseren Verständnis der Funktionsweise der Authentifizierung zeigt Fig. 7 die Form einer Lichtspur 37, die auf einer zweidimensionalen Kopie oder Fotografie 39 des Dosenbodens 1 der Getränkedose 2 gemäß Fig. 2 projiziert ist. Aufgrund des Fehlens einer konkaven Wölbung der ebenen Bildfläche 38, unterscheidet sich die projizierte Lichtspur 37 in diesem Fall nicht wesentlich von einem kreisrunden Blendefleck. Die oben beispielhaft skizzierte Authentifizierung würde daher ein deutlich anderes Verhältnis der maximalen und minimalen Ausdehnung dieses Flecks feststellen und die Überprüfung der Dreidimensionalität wird daher fehlschlagen.

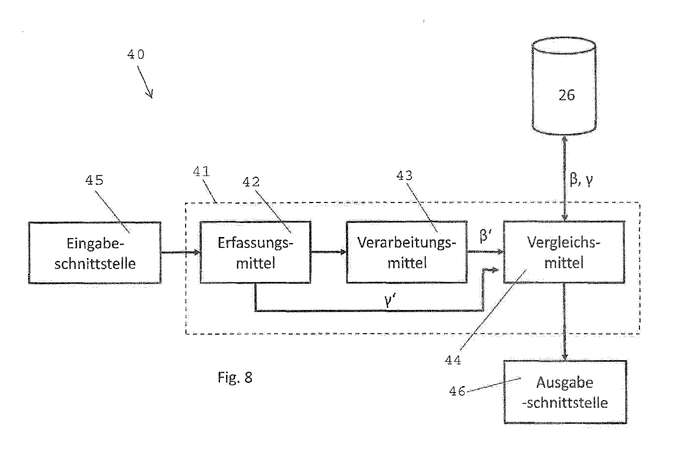

In Fig. 8 ist eine Vorrichtung 40 zur Authentifizierung eines auf einem Artikel 3 (vgl. Fig. 1-3) angeordneten visuellen Identifikators 4, 8 schematisch dargestellt. Die Vorrichtung 40 umfasst ein Computerprogrammprodukt 41, welches auf einem Computer (nicht gezeigt) ausgeführt wird. Das Computerprogrammprodukt 41 implementiert in Form von Softwaremodulen Erfassungsmittel 42, Verarbeitungsmittel 43 und Vergleichsmittel 44. Die Erfassungsmittel 42 sind zur Kommunikation mit einer Eingabeschnittstelle 45, z.B. mit einem Bildsensor und einem Abstandsensor, der Vorrichtung 40 verbunden.

Bei der Durchführung einer Authentifizierung wird von einem Benutzer mithilfe der Eingabeschnittstelle 45 ein Bild aufgenommen und zugleich ein Abstandsprofil eines Objektmerkmals festgestellt. Die Eingabeschnittstelle 45 übermittelt beides an die Erfassungsmittel 42. Die Erfassungsmittel 42 erfassen einen visuellen Identifikator und ein Referenzmerkmal in dem erhaltenen Bild. Außerdem erfassen die Erfassungsmittel 42 auf Basis des erhaltenen Abstandsprofils die dreidimensionale Form des Objektmerkmals und ermitteln daraus ein dreidimensionales Modell γ'. Sie übermitteln den erfassten Identifikator und das erfasste Referenzmerkmal an die Verarbeitungsmittel 43, welche daraus eine relative Anordnung β' ermitteln. Die Verarbeitungsmittel 43 übermitteln die ermittelte relative Anordnung β' zwischen dem Identifikator und dem Referenzmerkmal an die Vergleichsmittel 44. Außerdem erhalten die Vergleichsmittel 44 von den Erfassungsmittel 42 das erfasste Modell γ' und den erfassten Identifikator. Die Vergleichsmittel 44 übermitteln daraufhin an die Datenbank 26, mit der sie über eine geeignete Kommunikationseinrichtung, z.B. ein WLAN-Modul oder UMTS-Modul (nicht gezeigt) der Vorrichtung 40, verbunden sind, eine Datenbankabfrage auf Basis des erfassten Identifikators. Die Datenbank 26 führt die Datenbankabfrage aus und übermittelt die resultierende relative Anordnung β und das resultierende dreidimensionale Modell γ zurück an die Vergleichsmittel 44. Diese führen einen Vergleich einerseits zwischen den relativen Anordnungen β, β' und andererseits zwischen den Modellen γ, γ' durch. Falls eine Übereinstimmung sowohl der relativen Anordnungen β, β' als auch den Modellen γ, γ' festgestellt wird, schließen die Vergleichsmittel 44 daraus auf die Authentizität des erfassten Identifikators und geben diese Information an die Ausgabeschnittstelle 46 der Vorrichtung 40 weiter. Diese zeigt dem Benutzer der Vorrichtung 10 daraufhin eine entsprechende Erfolgsmeldung an.

## Patentansprüche

1. Computerimplementiertes Verfahren zur Authentifizierung eines auf einem Artikel (3) angeordneten visuellen Identifikators (22) auf Basis zumindest eines Bilds, wobei der Artikel (3) zumindest ein von dem visuellen Identifikator (22) unabhängiges Referenzmerkmal (7) und ein von einer Ebene abweichendes dreidimensionales Objektmerkmal (6) aufweist, umfassend:
- Erfassen des visuellen Identifikators (22) in dem zumindest einen Bild;
- Erfassen des Referenzmerkmals (7) in dem zumindest einen Bild;
- Erfassen einer Dreidimensionalität des Objektmerkmals (6);
- Ermitteln einer relativen Anordnung (β') zwischen dem erfassten Referenzmerkmal (7) und dem erfassten visuellen Identifikator (22);
- Vergleichen der ermittelten relativen Anordnung (β') mit einer vorgegebenen relativen Anordnung (β);
- Überprüfen der Dreidimensionalität des Objektmerkmals (6); und
- Authentifizieren des erfassten visuellen Identifikators (22), wenn die verglichenen relativen Anordnungen (β, β') übereinstimmen und wenn die Dreidimensionalität des Objektmerkmals (6) erfolgreich überprüft wurde.

2. Verfahren nach Anspruch 1, **dadurch gekennzeichnet, dass** das Erfassen einer Dreidimensionalität ein Erfassen zumindest einer Projektionseigenschaft des Objektmerkmals (6) in dem zumindest einen Bild umfasst, und dass das Überprüfen der Dreidimensionalität ein Vergleichen der erfassten Projektionseigenschaft des Objektmerkmals (6) mit einer korrespondierenden Projektionseigenschaft einer Ebene umfasst.

3. Verfahren nach Anspruch 1 oder 2, **dadurch gekennzeichnet, dass** das Erfassen einer Dreidimensionalität ein Erfassen zumindest einer Eigenschaft der dreidimensionalen Form des Objektmerkmals (6) umfasst, und dass das Überprüfen der Dreidimensionalität ein Vergleichen der erfassten Eigenschaft der dreidimensionalen Form des Objektmerkmals (6) mit einer korrespondierenden Eigenschaft einer vorgegebenen dreidimensionalen Form umfasst.

4. Verfahren nach Anspruch 3, **dadurch gekennzeichnet, dass** beim Erfassen der Dreidimensionalität des Objektmerkmals (6) ein dreidimensionales Modell (γ') des Objektmerkmals (6) aus der zumindest einen erfassten Eigenschaft der dreidimensionalen Form des Objektmerkmals (6) ermittelt wird und dass beim Überprüfen der Dreidimensionalität des Objektmerkmals (6) das ermittelte dreidimensionale Modell (γ') mit einem vorgegeben Modell (γ) verglichen wird.

5. Verfahren nach Anspruch 3 oder 4, **dadurch gekennzeichnet, dass** zum Erfassen zumindest einer Eigenschaft der dreidimensionalen Form des Objektmerkmals (6) ein geeignetes Aufnahmeverfahren, insbesondere ein abstandsmessendes Verfahren, vorzugsweise ein Lichtlaufzeitverfahren, ein Verfahren zur Erfassung eines 4-D-Lichtfelds, vorzugsweise mit einer Lichtfeldkamera, oder ein Verfahren basierend auf einer Stereokamera oder einem Triangulationssystem, verwendet wird.

6. Verfahren nach einem der Ansprüche 2 bis 5, **dadurch gekennzeichnet, dass** zur Erfassung einer Projektionseigenschaft des Objektmerkmals (6) oder zumindest einer Eigenschaft der dreidimensionalen Form des Objektmerkmals (6) mehrere, aus unterschiedlichen Betrachtungswinkeln aufgenommene Bilder des Objektmerkmals (6) in Beziehung gesetzt werden.

7. Verfahren nach Anspruch 6 **dadurch gekennzeichnet, dass** den aus unterschiedlichen Betrachtungswinkeln aufgenommenen Bildern jeweils eine Bewegung eines Erfassungsmittels zwischen den Aufnahmen der Bilder zugeordnet ist und beim Überprüfen der Dreidimensionalität des Objektmerkmals (6) eine anhand eines vorgegebenen Modells (γ) der dreidimensionalen Form des Objektmerkmals (6) und den zugeordneten Bewegungen ermittelte Verzerrung des visuellen Identifikators (22) und/oder des Referenzmerkmals (7, 9) validiert wird.

8. Verfahren nach Anspruch 6, **dadurch gekennzeichnet, dass** das in Beziehung Setzen einen Vergleich geometrischer Verzerrungen des visuellen Identifikators (22) und/oder des Referenzmerkmals (7) auf der Oberfläche des Artikels (3) in den aus unterschiedlichen Betrachtungswinkeln aufgenommenen Bildern umfasst.

9. Verfahren nach einem der Ansprüche 2 bis 8, **dadurch gekennzeichnet, dass** zur Erfassung einer Projektionseigenschaft des Objektmerkmals (6) oder zumindest einer Eigenschaft der dreidimensionalen Form des Objektmerkmals (6) mehrere, bei unterschiedlichen Lichtverhältnissen aufgenommene Bilder des Objektmerkmals (6) in Beziehung gesetzt werden.

10. Verfahren nach einem der Ansprüche 1 bis 9, **dadurch gekennzeichnet, dass** das Referenzmerkmal (7) zugleich das dreidimensionale Objektmerkmal (6) ist.

11. Verfahren nach einem der Ansprüche 1 bis 10, **dadurch gekennzeichnet, dass** die vorgegebene relative Anordnung (β) und/oder ein vorgegebenes Modell (γ) vor dem Vergleich aus einer zentralen Datenbank (26) abgerufen wird.

12. Verfahren nach einem der Ansprüche 1 bis 10, **dadurch gekennzeichnet, dass** die vorgegebene relative Anordnung (β) und/oder ein vorgegebenes Modell (γ) auf dem Artikel (3) selbst in visuell codierter Form hinterlegt ist und vor dem Vergleich erfasst wird.

13. Verfahren nach Anspruch 12, **dadurch gekennzeichnet, dass** die auf dem Artikel (3) hinterlegte relative Anordnung (β) und/oder das auf dem Artikel (3) hinterlegte vorgegebene Modell (γ) vor dem Vergleich mit einem vorgegebenen öffentlichen Schlüssel gemäß einem asymmetrischen Verschlüsselungsverfahren entschlüsselt wird.

14. Computerprogrammprodukt, das direkt in den internen Speicher eines digitalen Computers geladen werden kann und Softwarecodeabschnitte umfasst, mit denen die Schritte gemäß der Ansprüche 1 bis 13 ausgeführt werden, wenn das Produkt auf einem Computer läuft.

15. Vorrichtung zur Authentifizierung eines auf einem Artikel (3) angeordneten visuellen Identifikators (22) auf Basis zumindest eines Bilds, wobei der Artikel (3) zumindest ein von dem Identifikator (22) unabhängiges Referenzmerkmal (7) und ein von einer Ebene abweichendes dreidimensionales Objektmerkmal (6) aufweist, die Vorrichtung umfassend:
- eine Eingabeschnittstelle zur Eingabe zumindest eines Bilds;
- Erfassungsmittel zum Erfassen eines visuellen Identifikators (22) in dem zumindest einen eingegebenen Bild, zum Erfassen eines Referenzmerkmals (7) in dem zumindest einen eingegebenen Bild, und zum Erfassen einer Dreidimensionalität des Objektmerkmals (6);
- Verarbeitungsmittel zum Ermitteln einer relativen Anordnung (β') zwischen einem von den Erfassungsmitteln erfassten visuellen Identifikator (22) und einem von den Erfassungsmitteln erfassten Referenzmerkmal (7), wobei die Verarbeitungsmittel mit den Erfassungsmitteln verbunden sind;
- Vergleichsmittel zum Vergleichen einer von den Verarbeitungsmitteln ermittelten relativen Anordnung (β') mit einer vorgegebenen relativen Anordnung (β), zum Überprüfen der Dreidimensionalität des Objektmerkmals (6), und zum Authentifizieren eines von den Erfassungsmitteln erfassten visuellen Identifikators (22) bei Übereinstimmung der verglichenen relativen Anordnungen (β, β') und erfolgreicher Überprüfung der Dreidimensionalität des Objektmerkmals (6); und
- eine Ausgabeschnittstelle zum Ausgeben eines Ergebnisses einer von den Vergleichsmitteln durchgeführten Authentifizierung.
